# EUROPEAN PATENT APPLICATION

(11) **EP 4 764 290 A1**
(43) Date of publication of application: **24.06.2026**
(21) Application number: 24222565.4
(22) Date of filing: 20.12.2024
(51) Int. Cl.: F16L 51/02, F16L 59/065, F16L 59/14, F16L 59/18, F16L 59/21

(54) **A CRYOSTAT END FITTING**

(71) Applicant: Supernode Limited, Dublin D22HC81 (IE)
(72) Inventor: Stringer, Peter, Dublin (IE); Doyle, Stephen, Dublin (IE); Conroy, Joseph, Dublin (IE); Pereira, Reinaldo, Dublin (IE); Sanborn, Conrad, Dublin (IE); Acin, Marcos, Dublin (IE); Volschenk, Deon, Dublin (IE); McNally, Leo, Dublin (IE); O'Reilly, Brian, Dublin (IE); Dunn, Dwain, Dublin (IE)
(74) Representative: FRKelly

(57) **Abstract**

The present invention provides a cryostat end fitting adapted to provide a vacuum tight interface between components across which interface a cryogen flows, the cryostat end fitting comprising a cryostat including a thermoplastic inner conduit, a connector at an end of the inner conduit comprising a cylindrical sidewall secured to or formed integrally with the end of the inner conduit, the connector further comprising a cylindrical coupling having a compliant interface with the cylindrical sidewall.

## Description

### Field of the invention

The present invention relates to a cryostat end fitting, and in particular a cryostat end fitting of a low temperature or vacuum segment for use in joining a thermoplastic cryostat to a metallic component such as an electrical terminal or the like, and may find applications in superconducting cable systems and bulk cryogen transport.

### Background of the invention

The current state of the art in the design of vacuum insulated cryogenic applications such as high temperature superconductor (HTS) power cables includes the use of metallic alloy cryostats, typically of corrugated tubing, adopted from adjacent industrial uses such as liquid nitrogen (LNG) transfer solutions, to host HTS power cables and transmit pressurised cryogenic fluid to cool the HTS materials.

The use of thermoplastic pipes in place of corrugated metallic cryostats offer many benefits but also new challenges when cooled down to cryogenic operating temperatures. Further background information and details of exemplary reinforced RTP pipe design can be found in the Applicant's International Patent Application PCT/EP2023/082647.

A challenge arises in terminating such thermoplastic pipes, mechanically fixing them to further components within the system which consist of a different material, such as metallic end-fittings which will have different structural and thermal properties from the pipe.

In cryogenic applications such as superconducting cables, the vacuum annulus surrounding the pipe is critical in insulating the system and maintaining the cryogen at the required temperature. The key challenge is providing a mechanical connection between the thermoplastic pipe and end fitting whilst also managing and/or maintaining the vacuum, ensuring that the end fitting does not provide a vacuum leak path between the vacuum annulus and the cryogen flow channel.

Examples of such cryogenic applications are the main cryostat(s) of a superconducting cable system, vacuum insulated cryogenic return lines within such superconducting cable systems, vacuum insulated cryogenic transfer lines (for static applications), and bulk cryogen transfer systems.

It has been found that due to the above differences in structural properties and thermal contraction between the two disparate materials present in terminating such thermoplastic cryostats that both mechanical fixing and vacuum sealing is extremely difficult to achieve and in general cannot be performed by the same component. This is most notable when using a composite cryostat consisting of a thermoplastic inner conduit or liner formed from certain polymers that is wrapped in layers of reinforcing tapes such as carbon or glass fibre reinforced polymer tapes as disclosed in the above referenced International Patent Application PCT/EP2023/082647. In particular it has been found that differences in thermal expansion between the materials at the end fitting results in significant stress potentially leading to the formation of cracks in any of the components at the interface including any adhesives or the like, thereby establishing a vacuum leak path at the end fitting.

It is therefore an object of the present invention to provide a cryostat end fitting which addresses the above mentioned problems.

### Summary of the invention

According to a first aspect of the present invention there is provided a cryostat end fitting comprising a vacuum insulated cryostat including a thermoplastic inner conduit; a connector at an end of the inner conduit comprising a cylindrical sidewall secured to or formed integrally with the end of the inner conduit such as to establish a vacuum seal at the end of the inner conduit, the connector further comprising a cylindrical coupling having a compliant interface with the cylindrical sidewall.

Optionally, at least the connector sidewall comprises a material with a coefficient of thermal expansion that is complementary to the coefficient of thermal expansion of the end of the inner conduit.

Optionally, at least the cylindrical sidewall and the inner conduit comprise the same material.

Optionally, the compliant interface facilitates radial and/or longitudinal relative displacement between the coupling and the cryostat.

Optionally, compliance of the compliant interface is established at least in part by the geometry of the compliant interface.

Optionally, compliance of the compliant interface is established at least in part by the material characteristics of the compliant interface.

Optionally, the compliant interface is defined by one or more corrugations.

Optionally, the connector sidewall is adhered to the inner conduit and with a vacuum tight connection therewith.

Optionally, the cryostat end fitting comprises a sleeve a first end of which is secured to the cryostat at a location longitudinally remote from the connector, a second end of the sleeve being sealed to the coupling to define a vacuum annulus between an interior of the sleeve and an exterior of the cryostat.

Optionally, the coupling comprises a radially extending flange that is sealed to the sleeve.

Optionally, the inner conduit comprises at least one of LCP, PE, PEEK, PA, PEI, TPI, HDPE, PP, PVDF, PPS and/or ABS.

Optionally, the inner conduit comprises fillers to tune the co-efficient of thermal expansion of the inner conduit.

Optionally, the connector comprises at least one of LCP, PE, PEEK, PA, PEI, TPI, HDPE, PP, PVDF, PPS, ABS, invar, titanium, aluminium, steel and/or low CTE metals.

Optionally, the cryostat end fitting comprises an array of reinforcing tapes secured around an exterior surface of the inner conduit.

Optionally, the reinforcing tapes comprise fibre reinforced polymer tape.

Optionally, the reinforcing tapes do not extend to the end of the inner conduit.

Optionally, the reinforcing tapes comprise reinforcing fibres selected from one or more of carbon, glass, aramid, and/or basalt.

Optionally, the coefficient of thermal expansion of the end of the inner conduit is modified to be complementary with the coefficient of thermal expansion of the connector.

Optionally, the connector sidewall, the coupling and the flange are monolithic.

Optionally, the inner conduit comprises a smooth inner wall.

Optionally, the connector sidewall and/or the inner wall of the inner conduit are keyed, grooved or otherwise textured.

According to a further aspect of the invention there is provided a superconducting cable comprising at least one cryostat end fitting according to the first aspect; and at least one superconductor.

As used herein, the term "low CTE metal" is intended to mean a metal having a co-efficient of thermal expansion of less than 11e-6 m/m.K over the temperature range of ambient to cryogenic.

As used herein, the term "complimentary" is intended to mean that the coefficient of thermal expansion of the components in question is close enough to the coefficient of thermal expansion of another component being joined or interfaced thereto such that on cooldown of the joined or interfacing components any difference in CTE is not sufficient to impart stresses to the components that could lead to cracking or other damage that might otherwise compromise a vacuum seal at the interface.

As used herein, the term "cryogen" should not be construed as limiting, the cryostat end fitting and the cryostat described herein being suitable for use in any low temperature application and thus the use of the term "cryogen" is not intended to convey use in only extreme low temperature applications but rather in any cooled system.

Where the terms "cable" or "cable system" is used herein, it should be understood that this may encompass any cable, including but not limited to a suspended cable system, overhead cable system, buried cable system, and/or submerged cable system. Therefore, where the term cable is used herein it should be understood that this could be interchanged with the term "line" in the context of suspended cable applications.

### Brief description of the drawings

The present invention will now be described with reference to the accompanying drawings, in which;
Figure 1 illustrates a sectioned side elevation of a cryostat end fitting forming part of a cryogen transport system such as for use in a superconducting cable system;
Figure 2 illustrates a perspective view of an exemplary connector forming part of the cryostat end fitting shown in Figure 1;
Figure 3 illustrates the cryostat end fitting shown in Figure 1 with surrounding vacuum insulation illustrated schematically;
Figure 4 illustrates a modification to the cryostat end fitting shown in Figure 1;
Figure 5 illustrates a further modification to the cryostat end fitting shown in Figure 1;
Figure 6 illustrates a still further modification cryostat end fitting shown in Figure 1;
Figure 7 illustrates a further modification to the cryostat end fitting shown in Figure 1;
Figure 8 illustrates another modification to the cryostat end fitting shown in Figure 1;
Figure 9 illustrates a further modification to the cryostat end fitting shown in Figure 1;
Figure 10 illustrates a still further modification to the cryostat end fitting shown in Figure 1;
Figure 11 illustrates an embodiment of a cryostat end fitting according to the present invention; and
Figure 12 illustrates another embodiment of a cryostat end fitting according to the present invention.

### Detailed description of the drawings

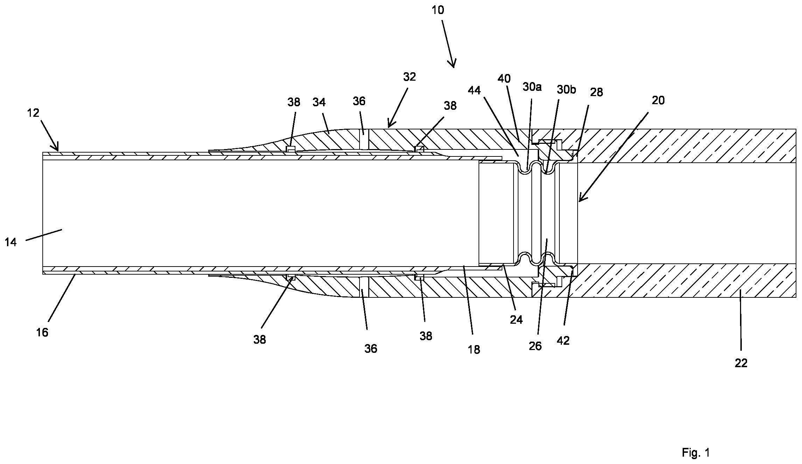

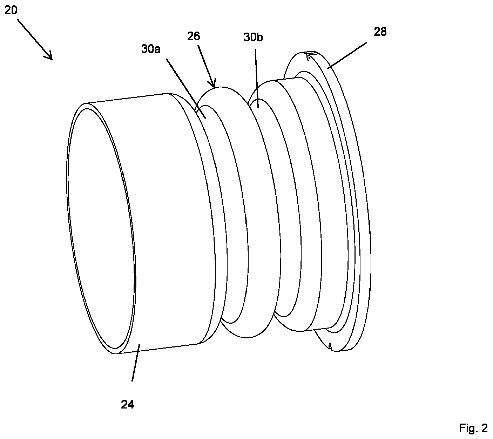

Referring now to Figures 1 to 3 of the accompanying drawings there is illustrated a cryostat end fitting, generally indicated as 10, for use in terminating one end of a cryostat 12 to a metallic or other component such as an electrical terminal or the like, which will generally have a mismatched coefficient of thermal expansion with respect to the cryostat 12. The cryostat end fitting 10 has particular use in superconducting cable applications, but may be used in other applications in which cryogenic fluid is being transported through one or more conduits such as vacuum insulated cryostats, and which conduits must be connected to another element such as a conventional metallic electrical conductor, another section of cryostat, a sub-cooling assembly or the like. The cryostat 12 may for example be part of a superconducting cable (not shown) including superconducting material cooled by a liquid cryogen (not shown) conveyed through the cryostat 12 alongside, surrounding or otherwise in direct or indirect thermal communication with the superconducting material. In superconducting applications the cryogen may be required to be kept at an operating temperature between 63 and 77 Kelvin in the case of a high temperature superconducting material. It will of course be understood that this is an exemplary temperature and is not essential to the operation of the present invention, in particular when a superconducting material is not being cooled as for example in the case of the industrial or bulk transfer of a cryogen. While the embodiment illustrated describes the connection of the cryostat 12 to a metallic end fitting it should also be understood that the connection may be to any other system component, but in particular a component having a different coefficient of thermal expansion to the cryostat 12 and which connected components will therefore experience different rates of thermal contraction during cooldown which would otherwise induce thermal stresses.

The primary function of the cryostat 12 when used in superconducting cable or bulk cryogen transport applications is to contain a cryogen (not shown), and in the case of superconducting cable systems to facilitate thermal communication between a superconductor and the cryogen to retain the superconductor at the necessary temperature at which superconductivity is established. In the case of bulk cryogen transport it is necessary to retain these reduced temperatures in order to keep the cryogen in liquid form. Liquid cryogens are denser than gaseous cryogens, which means that the same mass of liquid can be transferred at lower volumetric flow rates than a gaseous cryogen. This helps reduce the pressure drop that occurs in the transport system, which helps reach longer system lengths. It is also less complex and more cost effective to retain the cryogen as a liquid then to let it boil to a gas and subsequent reconvert back to liquid form. The cryostat 12 must also provide structural integrity against the pressurised cryogen, maintain a vacuum seal, and may be a dielectric insulator, and further optionally act as a thermal insulator to minimise heat ingress from the exterior and act as a permeability barrier. In addition, to facilitate design and transportation while minimising the cost of the superconducting cable systems, the cryostat 12 must have a low and optionally near zero, axial coefficient of thermal expansion (CTE) to avoid or reduce the use of conventional bellows based expansion joints, be capable of being spooled into reels, and be capable of being manufactured in long lengths, for example 100m or longer, Optionally 1 km or longer, or more Optionally 10km or longer.

In the embodiment illustrated the cryostat 12 comprises an inner tubular conduit 14, wound around and bonded to which are an array of reinforcing tapes 16, for example but not limited to the arrangement disclosed in the Applicant's International Patent Application PCT/EP2023/082647. The inner conduit 14 is optionally formed from a thermoplastic material, for example but not limited to polyethylene (PE), polyether ether ketone (PEEK), polyamide (PA), polyethylenimine (PEI), thermoplastic polyimide (TPI), high density polyethylene (HDPE), polypropylene (PP), polyvinylidene fluoride (PVDF), Polyphenylene sulfide (PPS), liquid crystal polymer (LCP) and acrylonitrile butadiene styrene (ABS), but it will of course be understood that other thermoplastics or blends thereof may be employed. The above materials may be modified with fillers to tune the CTE of the inner conduit 14. Fillers such as chopped glass fibres, chopped PTFE fibres, chopped carbon fibres, chopped Kevlar fibres, chopped liquid crystal polymer fibres, carbon nanofibers, aramid nanofibers, nanotubes, boron nitride and graphene nanoparticles. The one or more fillers may for example comprise from 0.1% to 40% of the volume of the final material from which the inner conduit 14 is made.

The use of a thermoplastic for the inner conduit 14 allows relatively low cost manufacture, for example via continuous extrusion of the conduit 14, while providing sufficient flexibility to allow for spooling. The thermoplastic of the conduit 14 may be reinforced with additives or fillers in order to provide desired performance and/or mechanical characteristics to meet the above or other performance requirements.

The cryostat end fitting 10 is arranged to minimise both mechanical and thermal stresses at a free end 18 of the inner conduit 14, as these stresses have been found to result in cracking at the free end 18 during cooldown which compromise the mechanical and vacuum integrity of the cryostat 12. The cryostat end fitting 10 is thus designed to move the conventional structural connection away from the free end 18 in order to minimise the stresses applied to the free end 18, in particular during cooldown to cryogenic operating temperatures where a significant mismatch in thermal contraction can occur. The cryostat end fitting 10 comprises a connector 20 secured to the free end 18 of the inner conduit 14 and arranged to allow a vacuum tight circumferential seal to be established and maintained at the free end 18 and across into the connected component. The connector 20 also allows mechanical forces to be isolated from the free end 18 which would otherwise be present when establishing an in-line structural connection between the cryostat 12 and a downstream component such as a conventional steel or other metallic pipe/connection or electrical terminal. In the embodiment illustrated the cryostat 12 is connected to an in-line copper electrical terminal 22. The connector 20 comprises a cylindrical sidewall 24 seated concentrically within the free end 18 and adhered in place by means of a suitable adhesive to establish a vacuum tight overlapping seal between the free end 18 and the cylindrical sidewall 24 of the connector 20. An exterior surface of the sidewall 24 may be textured and/or provided with keying features such as splines, grooves or dimples (not shown) or the like to increase the surface area such as to enhance adhesion to the free end 18 of the cryostat 12. It will be appreciated that the sidewall 24 could be dimensioned to be located over the free end 18, and again a suitable adhesive would be applied between the sidewall 24 and the free end 18. It will also be understood, as described in later embodiments, that the sidewall 24 could be formed integrally with the free end 18 of the inner conduit 14. In either case it is preferable but not essential that the reinforcing tapes 16 do not extend right to the free end 18 in order to reduce mechanical stress concentrations which would otherwise arise as a result of bonding the tapes 16 to the free end 18 of the inner conduit 14.

The connector 20 additionally comprises a coupling 26 including a radially extending flange 28 with which the coupling 26 may be used to provide a compliant connection between the connector 20 and the relevant downstream component such as the electrical terminal 22. The coupling 26 comprises, in the embodiment illustrated, a pair of circumferentially extending corrugations 30a, 30b extending between the cylindrical sidewall 24 and the flange 28. The corrugations 30a, 30b, primarily as result of geometry, permit limited radial and/or longitudinal displacement of the flange 28 relative to the sidewall 24 and therefore the inner conduit 14 in order to provide the requisite compliant at the interface between the free end 18 and the terminal 22. This relative displacement allows a significant reduction in the transmission of mechanical stresses or forces from the flange 28 to the inner conduit 14, for example arising from thermal contraction. Thus the connector 20 does not provide a structural connection between the cryostat 12 and a downstream component such as the electrical terminal 22, but does allow a fluid tight seal to be established with the downstream component via the flange 28 and corrugations 30a, 30b as described in detail hereinafter. It will be appreciated that the coupling 26 could comprise a single corrugation or more than two corrugations in order to vary the compliance of the connection between the cylindrical sidewall 24 and the flange 28. It will further be appreciated that there are many geometric alternatives to the corrugation 30 which could provide the necessary compliant connection between the sidewall 24 and the flange 28. It should also be understood that the compliance may be achieved by means of the material properties of the coupling 26, or a combination of geometry and material properties. The sidewall 24, corrugations 30a, 30 and coupling 26 are preferably monolithic but may be formed from separate parts and suitable joined.

In order to allow a structural connection to be established between the cryostat 12 and the downstream component such as the electrical terminal 22, the cryostat end fitting 10 comprises a rigid sleeve 32 which may be made from any suitable material, for example aluminium, copper, steel or titanium, which circumscribes and encloses the free end 18. A first end 34 of the sleeve 32 is positioned longitudinally remote or upstream from the free end 18 and the sleeve 32 is bonded or otherwise secured to the reinforcing tapes 16 such as to provide a structural connection between the sleeve 32 and the cryostat 12. The sleeve 32 may be adhesively bonded to the tapes 16, and one or more radially extending ports 36 may be provided in the sleeve 32 in order to allow a suitable adhesive to be delivered between the sleeve 32 and the cryostat 12 to establish the bond therebetween. A circumferentially extending seal 38 such as a wiper seal, O-ring or any other suitable seal may be provided between the sleeve 32 and cryostat 12 on either side of the port(s) 36 in order to prevent outward migration of the adhesive and thus ensure a comprehensive seal between the sleeve 32 and cryostat 12. A bond is therefore established with the cryostat over that length of the sleeve 32 between the two seals 38

From the first end 34 the sleeve 32 extends beyond the free end 18 to a second end 40 which is positioned to abut and be sealed to the flange 28 of the coupling 26 in order to establish a non-structural but vacuum tight seal therebetween. An exemplary arrangement in the illustrated embodiment involves threading the second end 40 into the copper terminal 22 such that the flange 28 is captured and clamped therebetween, although it will be appreciated that there are many alternative mechanical means by which the flange 28 may be sealed at or adjacent the second end 40 of the sleeve 32. A non-bonded seal 42 such as an indium seal, an O-ring or an energised seal is optionally located between the flange 28 and the sleeve 32 in order to ensure a vacuum seal at this location. It is important that the seal 42 is not bonded or otherwise secured to both the flange 28 or sleeve 32 in order to avoid generating stress in those part, in particular as might otherwise occur during cooldown to cryogenic operating temperatures. The seal 42 may however be bonded to one or other. Furthermore the flange 28 may be replaced by any other suitable functional alternative which allows a vacuum tight seal to be created between the coupling 26 and the sleeve 32, and optionally between the coupling 26 and the copper terminal 22 or other downstream component. Thus a liquid flow path through the connector 20 is provided which ensures a continuous vacuum seal along the circumferential inner wall at the transition from the inner conduit 14 to the copper terminal 22.

The interior diameter of the sleeve 32, about the second end 40 and circumscribing the free end 18, is larger than the outer diameter of the conduit 14 in order to establish a circumferential cavity 44 between the sleeve 32 and the conduit 14. This cavity ensures there is no contact between the sleeve 32 and the free end 18 to avoid the transmission of mechanical stresses to the free end 18.

In addition to isolating the free end 18 of the inner conduit 14 from mechanical stresses it is also necessary to minimise thermal stresses at the free end 18, in particular at cool down to cryogenic operating temperatures. For this reason the connector 20 is optionally comprised of a material having the same co-efficient of thermal expansion (CTE) as that of the inner conduit 14. In the embodiment illustrated the connector 20 is therefore optionally formed from a thermoplastic material, for example but not limited to polyethylene (PE), polyether ether ketone (PEEK), polyamide (PA), polyethylenimine (PEI), thermoplastic polyimide (TPI), high density polyethylene (HDPE), polypropylene (PP), polyvinylidene fluoride (PVDF), Polyphenylene sulfide (PPS), liquid crystal polymer (LCP), acrylonitrile butadiene styrene (ABS) or titanium, but it will of course be understood that other thermoplastics, blends thereof or other metallic or composite materials may be employed. If the reinforcing tapes 16 entirely cover the free end 18 the co-efficient of thermal expansion of the connector 20 is selected to match the combined CTE of the conduit 14 and tapes 16.

In this way as the cryostat end fitting 10 is reduced to a cryogenic operating temperature the inner conduit 14 and connector 20, having the same CTE, will thermally contract at the same rate and will thus prevent any significant thermal stresses from developing at the relatively mechanically weak free end 18, thereby avoiding the creation of cracks at the free end 18. The provision of the compliant connection established by the coupling 26 ensures that no mechanical stresses are transmitted to the free end 18, for example due to relative movement between the cryostat 12 and the copper terminal 22 in use. The connector 20 thus provided a vacuum seal at the transition from the free end 18 to the copper terminal 22, but does not provide a structural connection. The separate sleeve 32 provides the requisite structural connection between the cryostat 10 and the copper terminal 22. As this structural connection is established upstream of the free end 18 there is again an avoidance of stress transmission to the free end 18, any structural loading being transferred to the wider surface area established between the adhered first end 34 of the sleeve 32 and the bonded tapes 16 upstream of the free end 18. By avoiding the transmission of stresses and cracks at the free end 18 the cryostat 12 can be maintained at the necessary cryogenic temperatures, which are preferably achieved in part by the use of vacuum insulation of the cryostat 12.

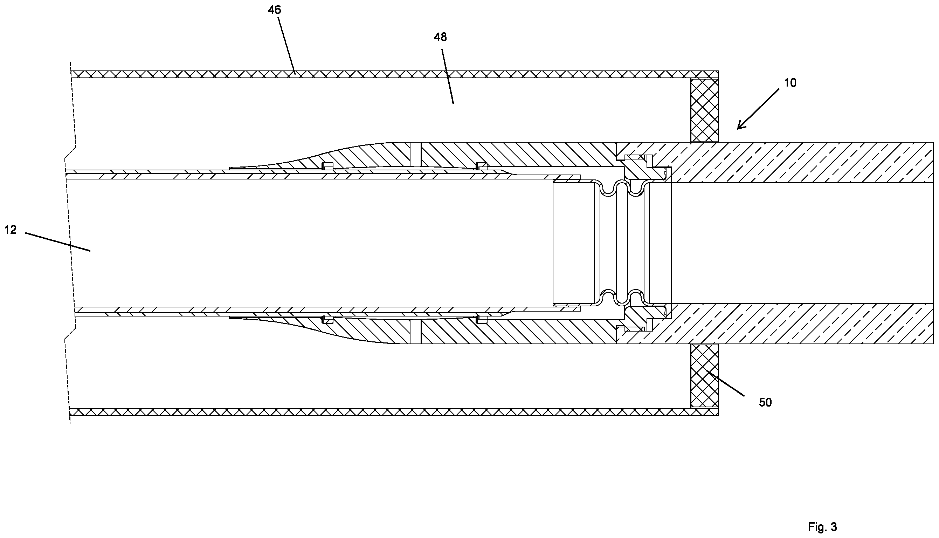

Figure 3 schematically illustrates an exemplary configuration used to provide this vacuum insulation. An outer cryostat 46 surrounds the cryostat 12, with a vacuum annulus 48 being established therebetween. Vacuum sealed end plugs 50 are located between the outer cryostat 46 and the terminal 22, although it will be appreciated that any other suitable configuration may be employed. The vacuum insulation may be supplemented with additional physical layers of insulation or the like (not shown). It will be appreciated that although not shown on the other Figures, vacuum insulation of the cryostat 12 is preferably provided.

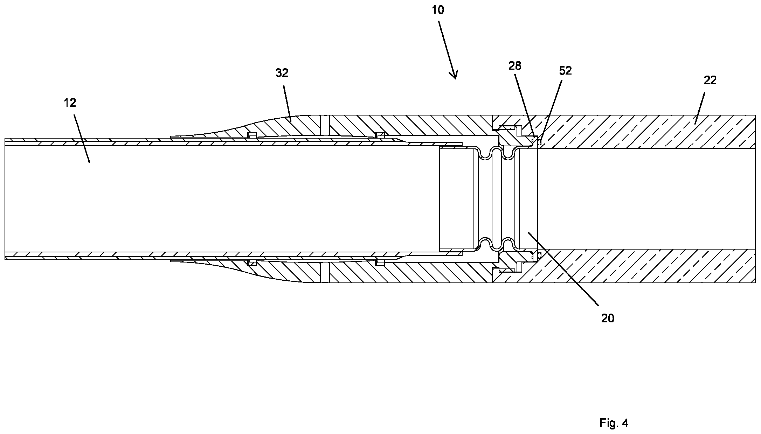

Referring to Figure 4 the cryostat end fitting 10 may be provided with an optional seal 52 between the outer face of the flange 28 and the copper electrical terminal 22. Again this seal 46 may comprise indium, an O-ring or an energised seal. It is also important that the seal 46 is not bonded or otherwise secured to both the flange 28 and terminal 22 in order to avoid generating stress in those part, in particular as might otherwise occur during cooldown to cryogenic operating temperatures.

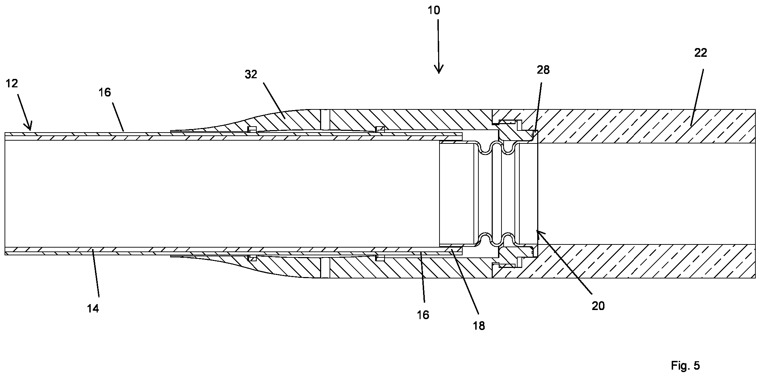

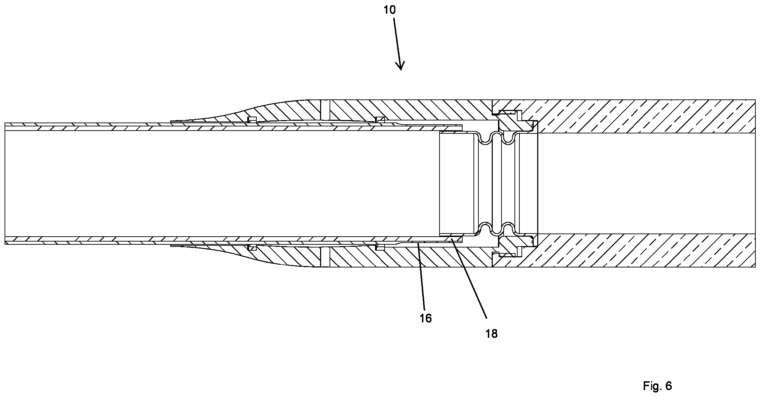

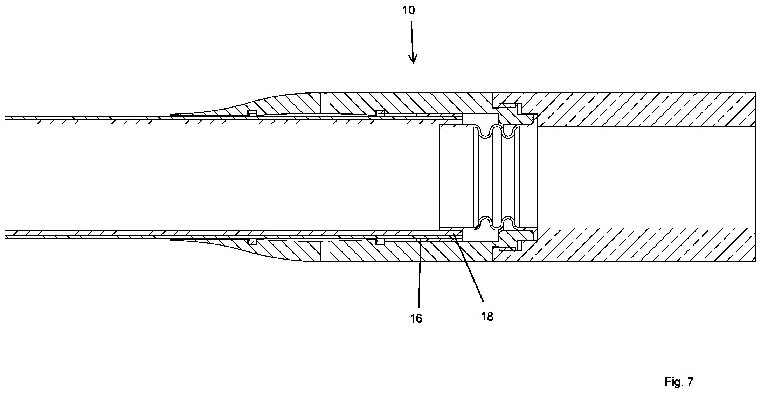

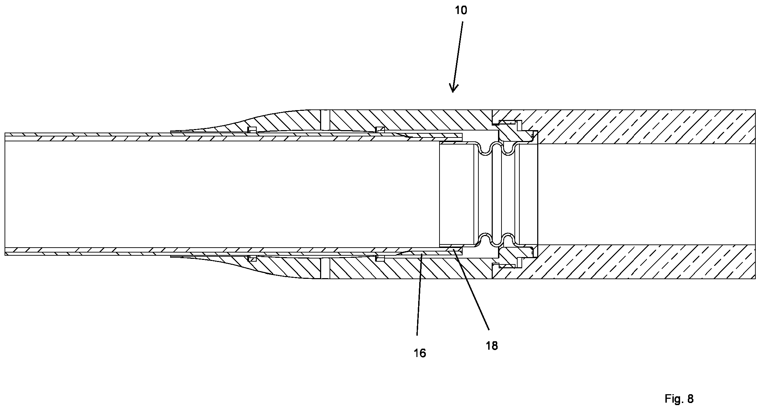

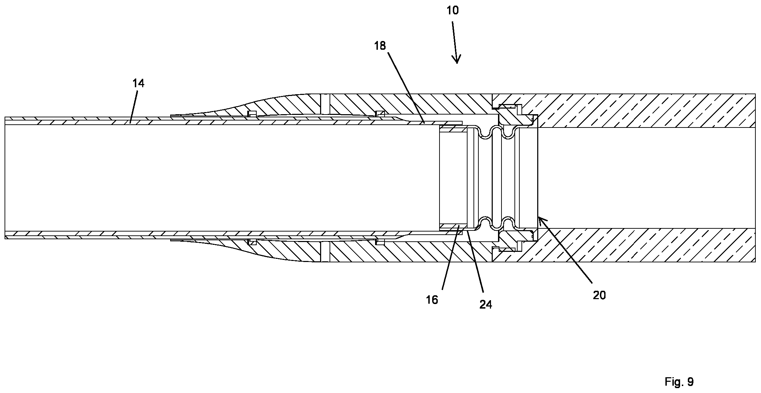

Turning now to Figure 5 there is illustrated a modification to the cryostat end fitting 10 in which the reinforcing tapes 16 extend to the free end 18. As an alternative variant of this configuration, and as illustrated in Figure 6, the quantity of tapes 16 around the free end 18 may be reduced but not completely removed, such as to tune the co-efficient of thermal expansion of the free end 18. In particular it is beneficial to tune the CTE to lie between the CTE of the cryostat 12 and the CTE of the connector 20. Alternatively as illustrated in Figure 7 the quantity of the tapes 16 around the free end 18 may be increased above that of the rest of the cryostat 12 in order to tune the CTE of the free end 18. Figure 8 illustrates a configuration of the end fitting 10 in which the tapes 16 are initially omitted or removed from the free end 18, and additional tapes 16 or alternative material is then added to the free end 18 to again tune the CTE of the free end 18. Figure 9 illustrates a further configuration of the end fitting 10 in which tapes 16 or alternative material is added to a sidewall 24 of the connector 20 to tune the CTE of the interface between the connector 20 and the free end 18 of the inner conduit 14

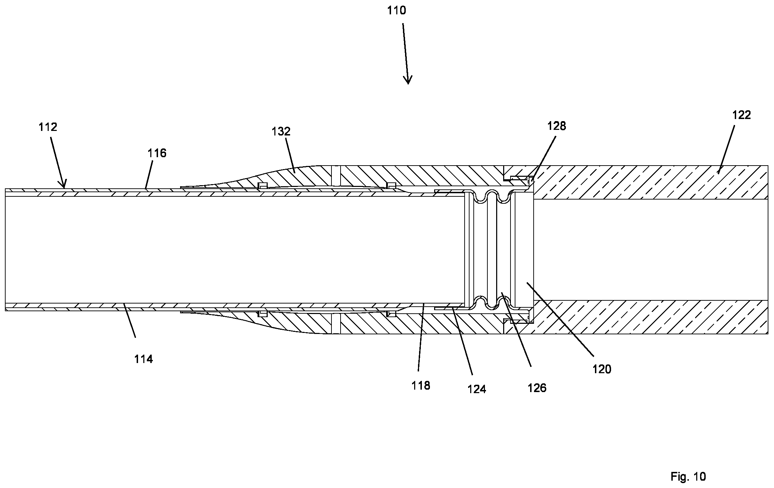

Referring now to Figure 10 there is illustrated a cryostat end fitting according to an alternative embodiment of the present invention, and generally indicated as 110. In this alternative embodiment like components have been accorded like reference numerals and unless otherwise stated perform a like function.

The cryostat end fitting 110 comprises a cryostat 112 including a thermoplastic inner conduit 114 wound around and secured to which are an array of reinforcing polymer tapes 116. It will be appreciated that while not illustrated, as with the first disclosed embodiment, the cryostat 112 is a vacuum insulated cryostat, and the cryostat end fitting 110 is designed to ensure that a vacuum seal is maintained at the end of the cryostat 112. An outer cryostat (not shown) may therefore be provided in order to establish a layer of vacuum insulation surrounding the cryostat 112. A free end 118 of the inner conduit 114 is free of the tapes 116 as hereinbefore described in relation to the first disclosed embodiment. A connector 120 is secured at the free end 118 and is operable as hereinbefore described to provide a vacuum tight connection to an upstream component such as an electrical terminal 122 while isolating the free end 118 from mechanical stresses. A rigid sleeve 132 is structurally secured to the cryostat 112 downstream of the free end 118 as hereinbefore described and establishes a mechanical connection to the terminal 122. A flange 128 extends from a compliant coupling 126 of the connector 120 and is captured between the free ends of the sleeve 132 and terminal 122.

The cryostat end fitting 110 differs from the first disclosed embodiment as a cylindrical sidewall 124 of the connector 120 is shaped and dimensioned to be secured and sealed about an exterior of the free end 118, in that region that is devoid of the reinforcing tapes 116.

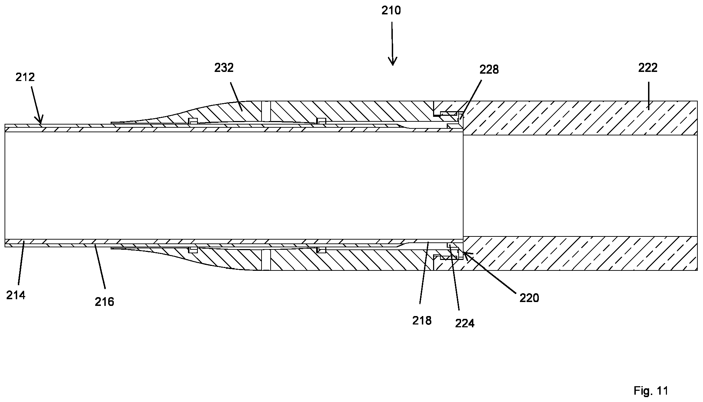

Referring to Figure 11 there is illustrated a cryostat end fitting according to another embodiment of the present invention, and generally indicated as 210. In this alternative embodiment like components have been accorded like reference numerals and unless otherwise stated perform a like function.

The cryostat end fitting 210 comprises a cryostat 212 including a thermoplastic inner conduit 214 wound around and secured to which are an array of reinforcing polymer tapes 216. It will be appreciated that while not illustrated, as with the first disclosed embodiment, the cryostat 212 is a vacuum insulated cryostat, and the cryostat end fitting 210 is designed to ensure that a vacuum seal is maintained at the end of the cryostat 212. An outer cryostat (not shown) may therefore be provided in order to establish a layer of vacuum insulation surrounding the cryostat 212. A free end 218 of the inner conduit 214 is optionally free of the tapes 216 as hereinbefore described. The length of the free end 218 is extended in order to tune the CTE at the free end and as a result the stresses experienced at the free end 218 are substantially reduced. A connector 220 is secured at the free end 218 and is operable as hereinbefore described to provide a vacuum tight connection to an upstream component such as an electrical terminal 222, and optionally isolating the free end 218 from any remaining stresses. A rigid sleeve 232 is structurally secured to the cryostat 212 downstream of the free end 218 as hereinbefore described and establishes a mechanical connection to the terminal 222.

The cryostat end fitting 210 differs from the first disclosed embodiment in the form and function of the connector 220, which is comprised of a cylindrical sidewall 224 extending radially from which is a flange 228. The flange 228 provides a low level of compliance between the free end 218 and the terminal 222 in order to avoid the transmission of stresses to the free end 218. The flange 228 is captured between the free ends of the sleeve 232 and terminal 222. One or more seals (not shown) as hereinbefore described may be provided between the flange 228 and the sleeve 232 and/or terminal 222.

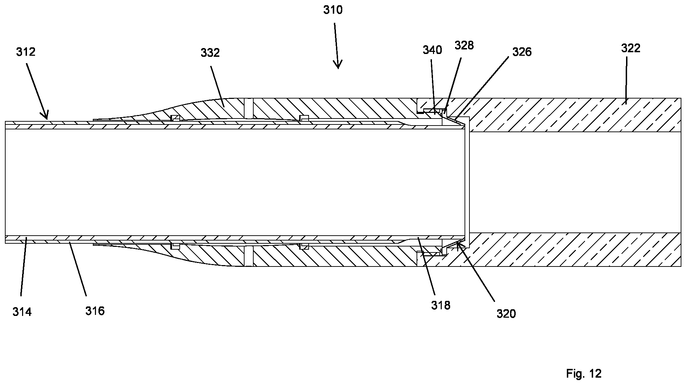

Referring now to Figure 12 there is illustrated a cryostat end fitting according to a further alternative embodiment of the present invention, and generally indicated as 310. In this alternative embodiment like components have been accorded like reference numerals and unless otherwise stated perform a like function.

The cryostat end fitting 310 comprises a cryostat 312 including a thermoplastic inner conduit 314 wound around and secured to which are an array of reinforcing polymer tapes 316. It will be appreciated that while not illustrated, as with the first disclosed embodiment, the cryostat 312 is a vacuum insulated cryostat, and the cryostat end fitting 310 is designed to ensure that a vacuum seal is maintained at the end of the cryostat 312. An outer cryostat (not shown) may therefore be provided in order to establish a layer of vacuum insulation surrounding the cryostat 312. A free end 318 of the inner conduit 314 is optionally free of the tapes 316 as hereinbefore described. A connector 320 is secured at the free end 318 and is operable as hereinbefore described to provide a vacuum tight connection to an upstream component such as an electrical terminal 322 while isolating the free end 318 from mechanical stresses. A rigid sleeve 332 is structurally secured to the cryostat 312 downstream of the free end 318 as hereinbefore described and establishes a mechanical connection to the terminal 322. A flange 328 of the connector 320 is captured between the free ends of the sleeve 332 and terminal 322.

The connector 320 comprising a coupling 326 defines a cylindrical sidewall which is secured to or formed integrally with an outer sidewall of the free end 318. The coupling 326 is conical in form and extends rearward such as to circumscribe the free end 318, a flange 328 extending radially outward from the outer end of the coupling 326 and sealingly captured between the free ends of the sleeve 332 and the terminal 322, which are preferably threaded together. The shape and material of the conical coupling 326 provides the requisite compliance in order to isolate the free end 318 from stresses arising from an CTE mismatch between the terminal 322 and the free end 318 during cooldown to cryogenic operating temperatures. One or more seals (not shown) as hereinbefore described may be provided between the flange 328 and the sleeve 332 and/or the terminal 322. As the flange 328 is set back from the end of the cryostat 312 a second end 340 of the sleeve 332 is also set back from the end of the cryostat 312, with the length or relative position of the terminal 322 being adjusted accordingly.

The invention is not limited to the embodiments described herein but can be amended or modified without departing from the scope of the present invention.

## Claims

1. A cryostat end fitting comprising a vacuum insulated cryostat including a thermoplastic inner conduit; a connector at an end of the inner conduit comprising a cylindrical sidewall secured to or formed integrally with the end of the inner conduit such as to establish a vacuum seal at the end of the inner conduit, the connector further comprising a cylindrical coupling having a compliant interface with the cylindrical sidewall.

2. A cryostat end fitting according to claim 1 in which at least the cylindrical sidewall comprises a material with a coefficient of thermal expansion that is complementary to the coefficient of thermal expansion of the end of the inner conduit.

3. A cryostat end fitting according to claim 1 in which at least the cylindrical sidewall and the inner conduit comprise the same material.

4. A cryostat end fitting according to any preceding claim in which the compliant interface facilitates radial and/or longitudinal relative displacement between the coupling and the cryostat.

5. A cryostat end fitting according to any preceding claim in which compliance of the compliant interface is established at least in part by the geometry of the compliant interface.

6. A cryostat end fitting according to any preceding claim in which compliance of the compliant interface is established at least part by the material characteristics of the compliant interface.

7. A cryostat end fitting according to any preceding claim in which the compliant interface is defined by one or more corrugations.

8. A cryostat end fitting according to any preceding claim in which the cylindrical sidewall is adhered to the inner conduit with a vacuum tight seal therebetween.

9. A cryostat end fitting according to any preceding claim comprising a sleeve having a first end secured to the cryostat at a location longitudinally remote from the connector and a second end sealed to the coupling to define a vacuum annulus between an interior of the sleeve and an exterior of the cryostat.

10. A cryostat end fitting according to any preceding claim in which the inner conduit comprises at least one of LCP, PE, PEEK, PA, PEI, TPI, HDPE, PP, PVDF, PPS and/or ABS.

11. A cryostat end fitting according to any preceding claim in which the inner conduit comprises fillers to tune the co-efficient of thermal expanse of the inner conduit.

12. A cryostat end fitting according to any preceding claim in which the connector comprises at least one of LCP, PE, PEEK, PA, PEI, TPI, HDPE, PP, PVDF, PPS, ABS ,invar, titanium and/or low CTE metals.

13. A cryostat end fitting according to any preceding claim comprising an array of reinforcing tapes secured around an exterior surface of the inner conduit.

14. A cryostat end fitting according to claim 13 in which the reinforcing tapes do not extend to the end of the inner conduit.

15. A cryostat end fitting according to claim 14 in which the reinforcing tapes comprise reinforcing fibres selected from one or more of carbon, glass, aramid, and/or basalt.
